# EUROPÄISCHE PATENTANMELDUNG

(11) **EP 0 559 050 A1**
(43) Veröffentlichungstag der Anmeldung: **08.09.1993**
(21) Anmeldenummer: 93102798.1
(22) Anmeldetag: 23.02.1993
(51) Int. Cl.: A62D 3/00, B09B 3/00

(54) **Dekontamination von asbestkontaminierten Wärmespeichersteinen**

(30) Priorität: 02.03.1992 DE 4206552
(71) Anmelder: Solvay Umweltchemie GmbH, D-30173 Hannover (DE); Solvay Fluor und Derivate GmbH, D-30173 Hannover (DE)
(72) Erfinder: Swidersky, Hans-Walter, W-3000 Hannover 1 (DE); Legat, Werner, W-3000 Hannover 51 (DE); Born, Thomas, W-3201 Holle 5 (DE)
(74) Vertreter: Lauer, Dieter, Dr.

(57) **Zusammenfassung**

Asbestkontaminierte Wärmespeichersteine aus Wärmespeicheröfen können wiederverwendet werden, wenn man sie mit wäßriger Flußsäure dekontaminiert.

## Beschreibung

Die Erfindung bezieht sich auf ein Verfahren zur Überführung von asbestkontaminierten Wärmespeichersteinen aus Wärmespeicheröfen in wiederverwendbares Material.

Elektrische Nachtspeicheröfen wurden unter Verwendung von Asbest als Isolier- und Flammschutzmaterial produziert. Defekte oder nicht mehr verwendete Öfen wurden bislang in Plastikfolien eingehüllt, auf Deponien verbracht und dort gelagert. Alternativ wurden die Nachtspeicheröfen zerlegt, um Deponieraum zu sparen und einzelne Bestandteile einer Wiederverwendung zuzuführen. Die in den Nachtspeicheröfen enthaltenen Wärmespeichersteine wurden bislang als Sondermüll deponiert, da die an der Oberfläche haftenden Asbestfasern nicht völlig entfernt werden konnten.

Aufgabe der vorliegenden Erfindung ist es, ein Verfahren zur Überführung von asbestkontaminierten Wärmespeichersteinen aus Wärmespeicheröfen in wiederverwendbares Material anzugeben.

Das erfindungsgemäße Verfahren zur Überführung von asbestkontaminierten Wärmespeichersteinen aus Wärmespeicheröfen in wiederverwendbares Material sieht vor, daß man die asbestkontaminierten Wärmespeichersteine maximal 5 Minuten lang mit einer wäßrigen 5 bis 40 Gew.-% einer Fluor enthaltenden anorganischen Säure, vorzugsweise einer 5 bis 40 Gew.-% HF enthaltenden Flußsäure oder einer wäßrigen Lösung, die KHF₂, NaHF₂ oder NH₄HF₂ in einer Konzentration enthält, die mindestens 30 %, vorzugsweise mindestens 50 % der Sättigungskonzentration entspricht, kontaktiert, die Oberfläche der Wärmespeichersteine abspült und die Steine trocknet.

Selbstverständlich kann man auch Kombinationen der angegebenen Zersetzungsmittel, gegebenenfalls unter Zusatz von Mineralsäuren, einsetzen.

Vorzugsweise werden die asbestkontaminierten Wärmespeichersteine 1 bis 3 Minuten lang mit der Säure, vorzugsweise Flußsäure oder der wäßrigen Lösung von NaHF₂, KHF₂ bzw. NH₄HF₂ kontaktiert. Diese Zeit reicht überraschenderweise völlig aus, um anhaftende Asbestfasern völlig zu entfernen. Fasern, die nicht bereits während des Kontaktes zwischen Steinen und Zersetzungsmittel völlig zersetzt sind, werden beim Entnehmen der Steine aus dem Zersetzungsbad oder beim Ablassen des Zersetzungsmittel aus dem Zersetzungsbad von der Oberfläche der Steine entfernt. Dies gilt selbst für Asbestfasern, die infolge hitzebedingter Verglasung sehr fest an der Oberfläche haften.

Die Entfernung der restlichen Säure oder des verwendeten Salzes von der Oberfläche der gereinigten Wärmespeichersteine bewirkt man zweckmäßig durch Abspülen mit Wasser und/oder einer basischen Lösung, beispielsweise einer wäßrigen Alkalilauge, Kalkmilch oder Alkalicarbonat- oder Alkalihydrogencarbonat-Lauge.

Die Steine bleiben durch das erfindungsgemäße Reinigungsverfahren in Struktur und Form unverändert und können nach der Trocknung genau wie die anderen Bestandteile wiederverwendet werden.

Mit dem erfindungsgemäßen Verfahren gelingt somit erstmalig die Überführung der Wärmespeichersteine in wiederverwendbares Material, insbesondere auch von magnesiumhaltigen, z.B. Magnesitsteinen.

Das folgende Beispiel soll die Erfindung weiter erläutern, ohne sie in ihrem Umfang einzuschränken.

### Beispiel:

Asbestkontaminierte Wärmespeichersteine mit hohem Magnesit-Anteil aus einem Nachtspeicherofen wurden in grob vorgereinigtem Zustand etwa 2 Minuten lang mit 40 Gew.-% HF enthaltender Flußsäure kontaktiert. Die oberflächlich anhaftenden Asbestfasern wurden dabei vollständig entfernt. Die Steine wurden dann mit Kalkmilch neutralisiert, mehrfach mit Wasser gewaschen und getrocknet. Anschließend konnten sie erneut bei der Herstellung von Nachtspeicheröfen als Wärmespeichersteine verwendet werden.

## Patentansprüche

1. Verfahren zur Überführung von asbestkontaminierten Wärmespeichersteinen aus Wärmespeicheröfen in wiederverwendbares Material, wobei man die asbestkontaminierten Wärmespeichersteine maximal 5 Minuten lang mit einer wäßrigen, 5 bis 40 Gew.-% einer Fluor enthaltenden anorganischen Säure, vorzugsweise einer 5 bis 40 Gew.-% HF enthaltenden Flußsäure oder einer wäßrigen Lösung, die KHF₂, NaHF₂ oder NH₄HF₂ in einer Konzentration enthält, die mindestens 30 % der Sättigungskonzentration entspricht, kontaktiert, die Oberfläche der Wärmespeichersteine abspült und die Steine trocknet.

2. Verfahren nach Anspruch 1, dadurch gekennzeichnet, daß man die asbestkontaminierten Wärmespeichersteine 1 bis 3 Minuten lang mit der Fluor enthaltenden Säure oder der wäßrigen, KHF₂, NaHF₂ oder NH₄HF₂ enthaltenden Lösung kontaktiert.

3. Verfahren nach Anspruch 1 oder 2, dadurch gekennzeichnet, daß man Magnesit-Wärmespeichersteine behandelt.
